# EUROPEAN PATENT SPECIFICATION

(11) **EP 2 071 755 B1**
(45) Date of publication and mention of the grant of the patent: **02.06.2010**
(21) Application number: 07301656.0
(22) Date of filing: 11.12.2007
(51) Int. Cl.: H04J 14/02

(54) **Optical Add-Drop Multiplexer**
Optischer Add-/Drop-Multiplexer
Multiplexeur d'extraction-insertion optique

(43) Date of publication of application: 17.06.2009
(73) Proprietor: Alcatel Lucent, 75008 Paris (FR)
(72) Inventor: Speciale, Masimo, 16163, Genova (IT); Perasso, Aldo, 16145, Genova (IT)
(74) Representative: Menzietti, Domenico

(56) References cited:
- WO-A-03/067796
- US-A1- 2007 053 650

## Description

### FIELD OF THE INVENTION

The present invention relates to the telecommunication field and more in particular to an Optical Add-Drop Multiplexer. Still more in particular, the invention concerns an Optical Add-Drop Multiplexer for a metropolitan telecommunications network.

### BACKGROUND OF THE INTENTION

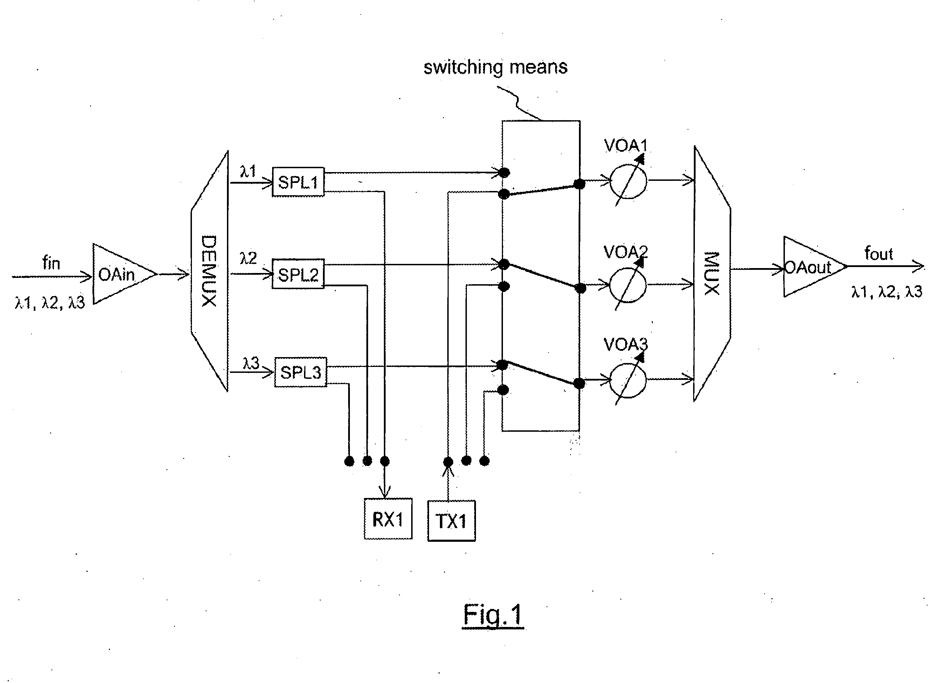

Referring to Fig. 1, it shows a known Optical Add-Drop Multiplexer (indicated herein after with OADM), including:
- an input optical fibre (fin) carrying an optical signal according to Wavelength Division Multiplexing (indicated with WDM). Fig.1 shows a WDM optical signal carrying three wavelengths (λ1, λ2, λ3), but any number of wavelenghts can be carried;
- an input optical amplifier (OAin) to amplify the received optical signal;
- a demultiplexer (DEMUX) for demultiplexing the amplified optical signal to a plurality of demultiplexer outputs. In this example the amplified optical signal carries wavelenghts λ1, λ2 and λ3 λ1 is demultiplexed over a first demultiplexer output, λ2 is demultiplexed over a second demultiplexer output and λ3 is demultiplexed over a third demultiplexer output;
- a drop port (RX1) for dropping locally an optical signal carried over a wavelength (in this example, the dropped wavelength is λ1) and an add port (TX1) for adding locally another optical signal over the same wavelength. Fig.1 shows one add/drop port, but the OADM can include any number of add/drop ports and thus any number of wavelengths can be added/dropped locally;
- a plurality of splitters (SPL1, SPL2, SPL3), each splitter including an input connected to a demultiplexer output and including two outputs. Each splitter is adapted to split the input optical signal to the two outputs, wherein a first output is connected to a local drop port and a second output is connected to a switching means input;
- switching means including a plurality of inputs connected to the splitters outputs and to the add ports and including a plurality of outputs. The switching means are adapted to switch the optical signals received from the splitters outputs and from the add ports to the plurality of switching means outputs;
- a plurality of variable optical attenuators (VOA1, VOA2, VOA3), each variable optical attenuator (indicated with VOA) including an input connected to one switching means output and including one output. Each VOA is adapted to generate, from the input optical signal, to the VOA output an optical signal and to set the power level of the generated optical signal to a pre-defined value (for example, 3 dBm);
- a multiplexer (MUX) including a plurality of multiplexer inputs, each multiplexer input being connected to one VOA output. The multiplexer is adapted to multiplex the optical signals received from the VOA outputs. In this example; the multiplexer includes three inputs, wherein the first input is carrying wavelenght λ1 received from the output of the first variable optical attenuator VOA1, the second input is carrying wavelenght λ2 from the output of the second variable optical attenuator VOA2 and the third input is carrying wavelenght λ3 received from the output of the third variable optical attenuator VOA3, which are multiplexed according to WDM to an optical signal carried over the multiplexer output;
- an output optical amplifier (OAout) to amplify the optical signal received from the multiplexer output;
- an output optical fibre (fout) for carrying the optical signal received from the output optical amplifier.

The switching means can be implemented through an optical switching matrix; an OADM including a reconfigurable optical switching matrix is indicated with Reconfigurable OADM (ROADM). The switching means can also be implemented through optical fibres patchcords, which are less expensive than an optical switching matrix.

In US 2007/0053650 A1 an optical transmission device includes an attenuator that attenuates an optical signal before being input into an optical element by a predetermined attenuation amount so that a level of an adjustment optical signal input into the optical element falls within a predetermined dynamic range of the optical element and the optical transmission device includes a controller that adjusts the predetermined attenuation amount so that a level of the optical signal input into the optical element falls within the predetermined dynamic range.

In WO 03/067796 A1 a WDM optical telecommunications network comprises a plurality of nodes interconnected by optical fibre waveguides. The nodes comprise a receive line card with a variable optical attenuator in front of an optical amplifier and a transmit line card with a further variable optical attenuator in front of a further optical amplifier.

It is known that an optical receiver can elaborate correctly an optical signal if the optical signal to noise ratio (OSNR) is higher than a threshold and if there is a sufficient power level of the optical signal. Referring specifically to the OADM of Fig.1, the power level at the demultiplexer input (and thus the power level at the OAin output) must have a minimum value, for example at least +12 dBm. The input optical amplifier OAin receives from the input fibre fin an optical signal which can have different power levels and operates in order to generate to the output an amplified optical signal having a sufficient power level, for example a constant output power level of +12 dBm. This is achieved by the input optical amplifier OAin having a gain which is controlled in order to set different values of the gain, depending on the power level of the input optical signal.

Similar considerations apply to the output optical amplifier OAout.

It is known that an optical amplifier is designed such that the gain is substantially flat over a limited range of the input wavelengths, while the gain has a slope out of this range (this is also known as "gain tilt"). Therefore the known solution, which requires to control the gain in order to set different values depending on the input power level, has the disadvantage that the output optical signal is affected by the gain tilt, that is the optical amplifier generates an output signal carrying wavelenghts with different power levels: this must be avoided, because the wavelenghts having higher power level can damage the wavelenghts having lower power level, thus decreasing the OSNR of these last wavelenghts.

The above problem could be partially solved by controlling the variable optical attenuators (VOA1, VOA2, VOA3) before the inputs of the multiplexer, by setting the power level of the optical signal of the variable optical attenuators outputs to the same constant value. This solution has the disadvantage to require to take into account the power levels of all the wavelengths and to set the power level at the variable optical attenuators outputs at the worst case power level, thus decreasing the OSNR of the wavelenghts carried by the multiplexed signal transmitted over the output optical fibre fout.

Moreover, a ROADM according to the known solution includes means for controlling the gain of the optical amplifier depending on the input power level and the network management system includes algorithms for controlling remotely the gain of the optical amplifier (and, more in general, for controlling hardware means of the ROADM for optimization of the network performance): this has the disadvantage to require complex optical amplifiers (thus also increasing the costs of the ROADM) and a complex network management system controlling the ROADM (thus also increasing the cost of the network management system).

Finally, the actual solution is suitable for a complex telecommunications network including optical signals carryed over many wavelengths (for example, more than 16), including many ROADMs (for example, more than 8) and wherein the span length (that is, the distance between two neighbours ROADM) is high (for example, more than 50 km). In fact, both the hardware means and the optimization algorithms are complex, thus increasing the costs of the ROADM and of the network management system. This is accepted by the network providers if the telecommunication network is complex (like explained above), while it's not accepted if the telecommunications network is less complex like a metropolitan network, including for example 16 wavelenghts and 6 ROADM and wherein the maximum span length is 50 km.

### SUMMARY OF THE INVENTION

In view of drawbacks of the known solutions, the main object of the present invention is to provide a network element wherein the optical signal is not affected by gain tilt, which is less complex, which is cheap and which is at the same time optimized for the network performance. This object is achieved by a method according to claim 1. The basic idea is to design in advance a "generic" OADM which is optimized for a pre-defined network and to adapt the specific OADM of the deployed network to the "generic" OADM (and thus to adapt the specific deployed network to the pre-defined network).

A further object of the invention is to provide a network element reducing the optical noise.

A further object of the invention is to provide a network element which can be optimized for at least two different pre-defined telecommunications networks.

Advantages of the invention are to provide a network element wherein the optical signal is not afftected by gain tilt, which Is less complex, which is cheap and which is at the same time optimized for the deployed network.
According to a first aspect, the present invention provides a network element including a first variable optical attenuator for receiving a first optical signal and for generating a second optical signal, including first monitoring means for detecting the power level of the first or second optical signal and, in case the detected power level is greater or equal than a first working value, for controlling therefrom the first variable optical attenuator in order to set the power level of the second optical signal to a pre-defined second working value, including a first amplifier for receiving the second optical signal at the pre-defined second working value power level and for generating therefrom an amplified third optical signal according to a pre-defined first power gain, including means for receiving the third optical signal and for generating therefrom a fourth optical signal, and including a second amplifier for receiving a fifth optical signal and for generating therefrom an amplified sixth optical signal, wherein the network element further comprises a second variable optical attenuator for receiving the fourth optical signal and second monitoring means for detecting the power level of the fourth or fifth optical signal and, in case the detected power level is greater or equal than a third working value, for controlling therefrom the second variable optical attenuator in order to set the power level of the fifth optical signal to a pre-defined fourth working value and wherein the second amplifier is for generating the amplified sixth optical signal according to a pre-defined second power gain.

Preferably, in case the detected power level of the fourth optical signal is smaller than the third working value, the second monitoring means are further adapted to control therefrom the second variable optical attenuator in order to set the power level of the fifth optical signal to a second non-working value by setting the power level of the second variable optical attenuator (VOAout) output to the maximum attenuation value.

Preferably, in case the detected power level of the first or second optical signal is greater than a fifth working value, the fifth working value being greater than the first working value, the first monitoring means are further adapted to control therefrom the first variable optical attenuator in order to set the power level of the second optical signal to a pre-defined sixth working value, the pre-defined sixth working value being greater than the pre-defined second working, value. The network element further includes a third amplifier for receiving the second optical signal at the pre-defined sixth working value power level and for generating therefrom the third optical signal according to a pre-defined third power gain, the third power gain being smaller than the first power gain.

Preferably, the first non-working value is substantially a maximum attenuation value set by the first variable optical attenuator and the second non-working value is substantially a maximum attenuation value set by the second variable optical attenuator.

According to a second aspect, the present invention provides a telecommunications network including at least one network element according to the first aspect.

### BRIEF DESCRIPTION OF THE DRAWINGS

Fig.1 schematically shows an optical Add-Drop Multiplexer according to the prior art.
Fig.2 schematically shows an optical Add-Drop Multiplexer according to an embodiment relating to the invention.
Fig.3 schematically shows an optical Add-Drop Multiplexer according to a first embodiment of the invention.
Fig.4 schematically shows an optical Add-Drop Multiplexer according to a second embodiment of the invention.

### BEST MODE FOR CARRYING OUT THE INVENTION

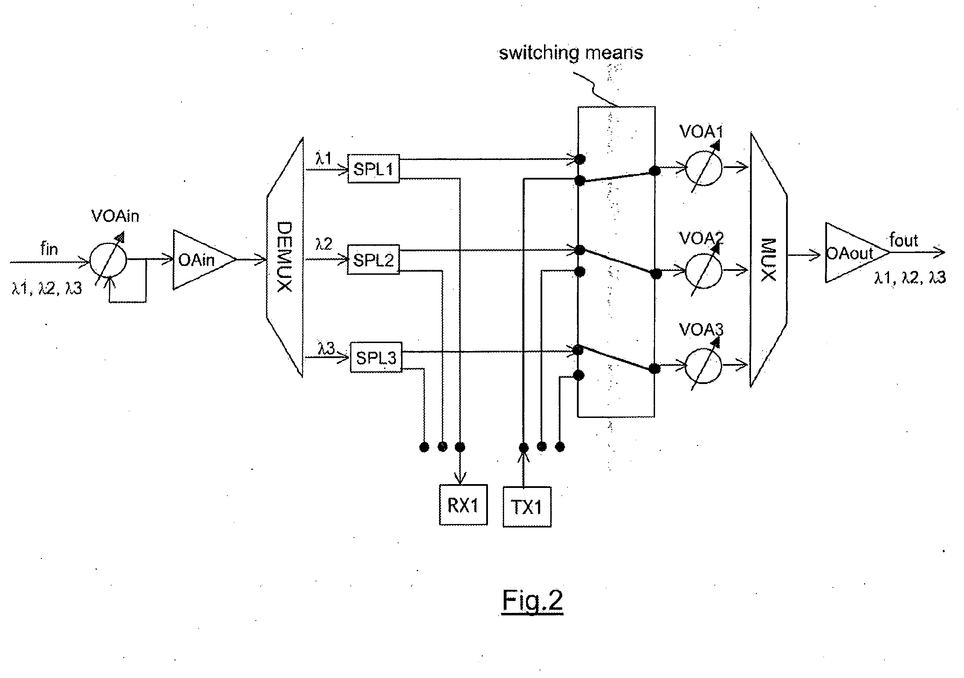

Referring to Fig.2, it shows an OADM according to an embodiment relating to the invention, wherein the OADM is adapted to manage three wavelengths λ1, λ2, λ3, like previously explained for Fig.1. According to the embodiment of Fig. 2 the OADM comprises an input variable optical attenuator VOAin including an input connected to the input optical fibre fin and including an output connected to the input of the input optical amplifier OAin.

The OADM further comprises input monitoring means and VOAin includes a control input driven by the input monitoring means: this is shown in Fig.2 with an arrow from the VOAin output to the control input of VOAin. The input monitoring means are adapted to detect the power level of the optical signal at the VOAin output and to control the VOAin (through the VOAin control input) such that VOAin sets the power level of the VOAin output to a constant working value (for example, -11 dBm).

The OADM further comprises an input optical amplifier OAin adapted to receive from the VOAin output the optical signal having the constant working value (in the example, -11 dBm), to generate therefrom an amplified optical signal according to a constant gain (for example, +23 dB) and to generate to the output of the input optical amplifier an optical signal having a constant power level (in this example, +12 dBm).

Therefore according to the embodiment of Fig. 2, the input optical amplifier OAin operates not only at a constant output power level, but also at a constant input power level and it's optimized for receiving and amplifying this constant input power level, thus it's not affected by gain tilt. In other words, OAin operates at a constant gain, that is a gain substantially flat over the range of the input wavelenghts.

The embodiment of Fig. 2 is particularly advantageous for a metropolitan telecommunication network which is less complex, like explained above. For example, the network is a ring network carrying a WDM signal including 16 wavelengths and designed in order to have an OSNR= 23 dB for all the dropped wavelengths for all the possible network connections; the input optical amplifier OAin operates with a constant input power of -11 dBm, with a constant gain of +23 dB and with a constant output power of +12 dBm.

In case the maximum span lenght is 50 Km, it's possible to deploy a ring network including a maximum number of 6 OADMs which meets the above OSNR constraints, thus the maximum ring lenght is 300 km.

In case the maximum span lenght is 35 Km, it's possible to deploy a ring network including a maximum number of 8 OADMs which meets the above OSNR constraints, thus the maximum ring lenght is 280 km.

In case the maximum span lenght is 30 Km, it's possible to deploy a ring network including a maximum number of 10 OADMs which meets the above OSNR constraints, thus the maximum ring lenght is 300 km.

In case the maximum span lenght is 25 Km, it's possible to deploy a ring network including a maximum number of 12 OADMs which meets the above OSNR constraints, thus the maximum ring lenght is 300 km.

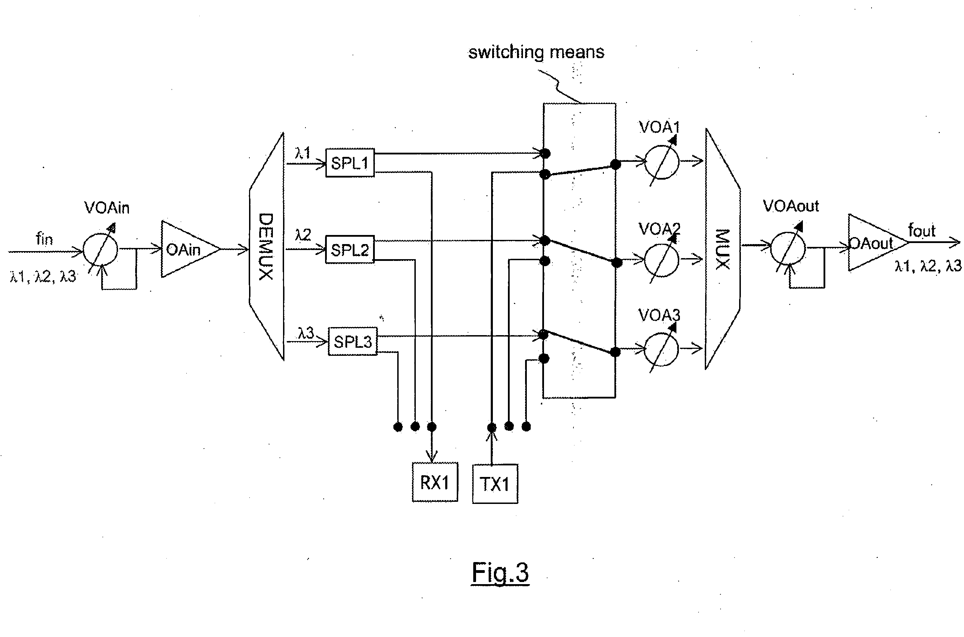

Fig.3 shows a first embodiment of the invention.

According to the first embodiment of the invention, the OADM further comprises an output variable optical attenuator VOAout including an input connected to the multiplexer output and including an output connected to the input of the output optical amplifier OAout.

The OADM further comprises output monitoring means and VOAout includes a control input driven by the output monitoring means: this is shown in Fig.3 with an arrow from the VOAout output to the control input of VOAout. The output monitoring means are adapted to detect the power level of the optical signal at the VOAout output and to control the VOAout (through the VOAout control input) such that VOAout sets the power level of the VOAout output to a constant working value (for example, -8 dBm).

The output optical amplifier OAout is adapted to receive from the VOAout output the optical signal having the constant working value (in the example, -8 dBm), to generate therefrom an amplified optical signal according to a constant gain (for example, +21 dB) and to generate to the output of the output optical amplifier an optical signal having a constant power level (in this example, +13 dBm).

Therefore according to the first embodiment of the invention, the output optical amplifier OAout operates not only at a constant output power level, but also at a constant input power level and it's optimized for receiving and amplifying this constant input power level, thus it's not affected by gain tilt. In other words, OAout operates at a constant gain, that is a gain substantially flat over the range of the input wavelenghts.

Therefore according to the first embodiment of the invention, both the input optical amplifier OAin and the output optical amplifier OAout operate at a constant gain.

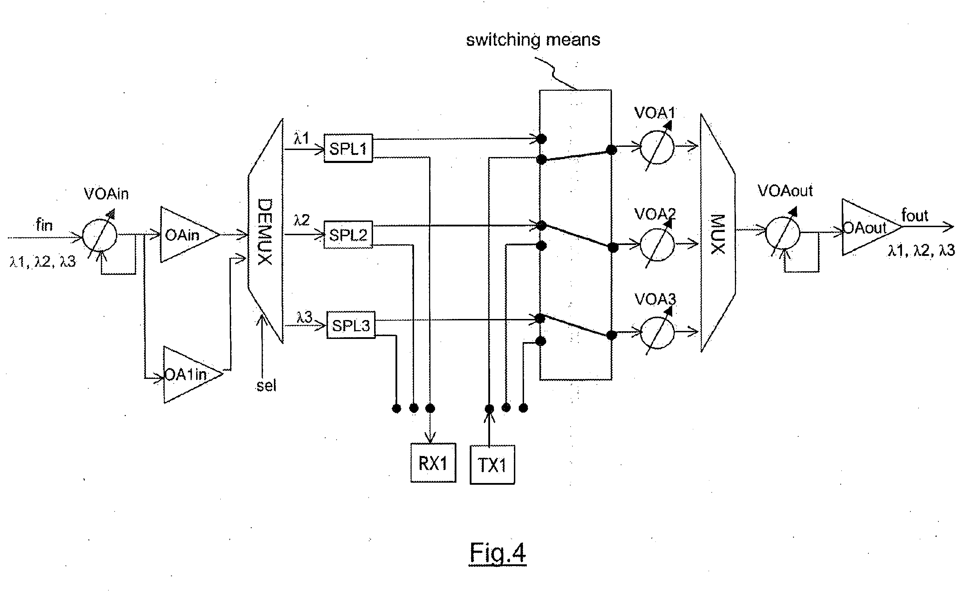

Fig. 4 shows a second embodiment of the invention.

According to the second embodiment of the invention, the OADM further comprises a second input optical amplifier OA1 in. The OADM includes input monitoring means adapted to detect if the power level of the optical signal at the VOAin output is comprised between a first threshold and a second threshold or if it's higher than a second threshold, wherein the second threshold is higher than the first threshold. The OADM further includes means comprising a first input and two outputs, the first input for receiving the optical signal from the VOAin output. The means can be a splitter for splitting the optical signal at the VOAin output into two optical signals over the two outputs; alternatevely, the means can be a switch for switching the optical signal at the VOAin output over one of the two outputs.

The first output is connected to the input of the first input optical amplifier OAin and the second output is connected to the input of the second input optical amplifier OA1 in. Moroever, the demultiplexer includes two inputs connected to the output of the first and second input optical amplifier and includes one control input (indicated with "sel") for selecting one of the two inputs.

In case the input monitoring means detect a power level of the optical signal at the VOAin output comprised between the first threshold and the second threshold, the input monitoring means and the input variable optical attenuator VOAin operate like described for the embodiment of Fig. 2 (or Fig. 3), that is the input monitoring means are adapted to control the VOAin in order to set the power level of the VOAin output to a first constant working value (in the example, -11 dBm) and the first input optical amplifier OAin receives from the VOAin output the optical signal having the first constant working value and generates therefrom an amplified optical signal according to a first constant gain (in the example, +23 dB). In this case, the demultiplexer selects (through the control input "sel") the optical signal from the first Input connected to the output of the first input optical amplifier OAin.

In case the input monitoring means detect a power level of the optical signal at the VOAin output higher than a second threshold, the input monitoring means are adapted to control the VOAin in order to set the power level of the VOAin output to a second constant working value (for example, -6 dBm) higher than the first constant working value. The second input optical amplifier OA1 in receives from the VOAin output the optical signal having the second constant working value, generates therefrom an amplified optical signal according to a second constant gain (for example, +18 dB) smaller than the first gain, wherein the power level of the output of the second input optical amplifier OA1in is equal to the power level (in the example, +12 dBm) which would have the output of the first input optical amplifier OAin in case the input monitoring means detect a power level of the optical signal at the VOAin output comprised between the first threshold and the second threshold. In this second case the demultiplexer selects (through the control input) the optical signal from the second input connected to the output of the second input optical amplifier OA1in.

The second embodiment is an improvement of the embodiment of Fig. 2 (and Fig. 3) and it's particularly advantageous in case of a network including short spans, for example wherein the span length is smaller than 25 Km.

In fact, in this case the power level of the received optical signal is higher. According to the embodiment of Fig. 2 (or Fig. 3), the input variable optical attenuator VOAin is adapted to set the power level of the VOAln output to a value which is smaller (in the example, -11 dBm) than the power level of the received optical signal (for example, -4 dBm) and there would be an high attenuation of the power level of the received optical signal (from -4 dBm to -11 dBm). This drawback can be overcome in the second embodiment wherein the VOAin is adapted to set the power level of the VOAin output to a value (for example, -6 dBm) higher than the value (-11 dBm) of the embodiment of Fig. 2 (and Fig. 3) and by including the second input optical amplifier OA1 in adapted to receive this higher value and having a gain smaller (for example, +18 dB) than the gain (+23 dB in the above example) of the first input optical amplifier OAin.

This has the advantage that the number of OADMs of the network can be increased because the OSNR of the wavelengths is higher.

Fig.4 shows an OADM including both an input variable optical attenuator VOAin and an output variable optical attenuator VOAout, but it's also possible a network element including only the input variable optical attenuator VOAin.

The second embodiment can be further improved by adding a third input optical amplifier having a gain smaller that the gains of the first and second input optical amplifiers. More in general, the OADM includes a plurality of input optical amplifiers having different gains, each input optical amplifier being adapted to receive a constant input power level (through the VOAin), to operate at a constant gain which is substantially flat over the input wavelengths and to generate an amplified constant output power level. One of the plurality of input optical amplifiers is selected depending on the deployed network (for example, depending on the span lengths of the network).

According to a third embodiment of the invention (not shown in the drawings), the telecommunication network includes two different types of OADMs. A first type of OADM includes an input optical amplifier OAin according to the first (or second) embodiment. A second type of OADM includes an input optical amplifier adapted to receive from the VOAin output the optical signal having another constant working value higher than the constant working value of the input optical amplifier OAin of the first type of OADM, to generate therefrom an amplified optical signal according to another constant gain smaller than the constant gain of the first type of OADM and to generate to the output of the second input optical amplifier an optical signal having the same constant power level of the first type of OADM. The first type of OADM is used for receiving a WDM optical signal from spans with longer length (for example, more than 25 Km) and the second type of OADM is used for receiving a WDM optical signal from spans with shorter length (for example, less than 25 Km).

Preferably, a telecommunication network according to the third embodiment includes a plurality of different types of OADMs, each OADM including an input optical amplifier operating at a constant input power and at a constant gain, that is a gain substantially flat over the range of the input wavelenghts.

Preferably, each OADM (out of the plurality of different types of OADMs) according to the third embodiment further includes an output optical amplifier operating at a constant input power and at a constant gain, that is a gain substantially flat over the range of the input wavelenghts.

According to a fourth embodiment of the invention (not shown in the drawings), the input monitoring means of the above embodiments are further adapted to detect if an Invalid optical signal is received from the input fibre, for example by detecting if power level of the optical signal at the input fibre is smaller than a threshold, and to control the VOAin (through the VOAin control input) in order to set the power level of the VOAin output to the maximum attenuation value (for example -25 dBm).

Therefore according to the fourth embodiment of the invention, VOAin has 2 working modes:
- the first is the equalization mode like explained for the embodiment of Fig. 2 and the first, second, and third embodiments, wherein a valid optical signal is received at the input fibre fin and the power level of the VOAin output is set to a constant working value;
- the second is a shutter mode like explained for the fourth embodiment, wherein an invalid optical signal is received at the input fibre fin and the power level of the VOAin output is set to the maximum attenuation value.

According to the shutter mode, VOAin sets the power level of the VOAin output to the maximum attenuation value: this has the advantage not to damage the network performance. In fact, in case of reception of an invalid optical signal, only optical noise is received by the VOAin; according to the equalization mode, the VOAin is controlled by the monitoring means in order to set the VOAin output to the minimum attenuation and this signal carrying only noise is amplified by the OAin to the maximum power level, in order to generate a constant output optical power (in the above examples, +12 dBm). This constant output power can't be reached and there is the saturation of the input optical amplifier. This amplification of the optical noise can degrade the performance of the network expecially in case of a ring network, wherein the optical noise travels again in the ring and is further amplified by optical line amplifiers or by optical amplifiers in the OADM, thus reducing the power level of the valid optical signals over the wavelengths carrying configured connections.

Similar considerations apply to the output variable optical attenuator VOAout of Fig.3 and Fig. 4, which can have 2 working modes.
The embodiments of Fig. 2 and according to the invention describe input monitoring means for detecting the power level of the optical signal at the VOAin output; alternatevely, the monitoring means are adapted to detect the power level of the optical signal at the VOAin input. Similar considerations apply to the output monitoring means, which can detect the power level of the optical signal at the VOAout output or at the VOAout input.

Preferably, the input monitoring means are integrated in the input variable optical attenuator VOAin.

Preferably, the output monitoring means are integrated in the output variable optical attenuator VOAout.

Preferably, the input monitoring means and the input variable optical attenuator VOAin are integrated in the input optical amplifier OAin.

Preferably, the output monitoring means and the output variable optical attenuator VOAout are integrated in the output optical amplifier OAout.

## Claims

1. Network node including:
- a first variable optical attenuator (VOAin) for receiving a first optical signal and for generating a second optical signal;
- first monitoring means for detecting the power level of the first or second optical signal and, in case the detected power level is greater or equal than a first working value, for controlling therefrom the first variable optical attenuator in order to set the power level of the second optical signal to a pre-defined second working value;
- a first amplifier (OAin) for receiving the second optical signal at the pre-defined second working value power level and for generating therefrom an amplified third optical signal according to a pre-defined first power gain,
- means (DEMUX, switching means, MUX) for receiving the third optical signal and for generating therefrom a fourth optical signal; and
- a second amplifier (OAout) for receiving a fifth optical signal and for generating therefrom an amplified sixth optical signal,
**characterized by**:
- a second variable optical attenuator (VOAout) for receiving the fourth optical signal and for generating the fifth optical signal and
- second monitoring means for detecting the power level of the fourth or fifth optical signal and, in case the detected power level is greater or equal than a third working value, for controlling therefrom the second variable optical attenuator in order to set the power level of the fifth optical signal to a pre-defined fourth working value;
wherein said second amplifier (OAout) is for generating said amplified sixth optical signal according to a pre-defined second power gain.

2. Network node according to claim 1, wherein, in case the detected power level of the first optical signal is smaller than the first working value, the first monitoring means are further adapted to control therefrom the first variable optical attenuator (VOAin) in order to set the power level of the second optical signal to a first non-working value by setting the power level of the first variable optical attenuator (VOAin) output to the maximum attenuation value.

3. Network node according to claim 1, wherein, in case the detected power level of the fourth optical signal is smaller than the third working value, the second monitoring means are further adapted to control therefrom the second variable optical attenuator (VOAout) in order to set the power level of the fifth optical signal to a second non-working value by setting the power level of the second variable optical attenuator (VOAout) output to the maximum attenuation value.

4. Network node according to any of the previous claims, wherein, in case the detected power level of the first or second optical signal is greater than a fifth working value, the fifth working value being greater than the first working value, the first monitoring means are further adapted to control therefrom the first variable optical attenuator (VOAin) in order to set the power level of the second optical signal to a pre-defined sixth working value, the pre-defined sixth working value being greater than the pre-defined second working value,
the network node further including a second input amplifier (OA1in) for receiving the second optical signal at the pre-defined sixth working value power level and for generating therefrom the third optical signal according to a pre-defined third power gain, the third power gain being smaller than the first power gain.

5. Telecommunications network including at least one network node according to any of claims 1 to 4.

## Patentansprüche

1. Netzwerkknoten, umfassend:
- Ein erstes verstellbares optisches Dämpfungsglied (VOAin), um ein erstes optisches Signal zu empfangen und ein zweites optisches Signal zu erzeugen;
- erste Überwachungsmittel, um den Leistungspegel des ersten oder des zweiten optischen Signals zu messen und, wenn der gemessene Leistungspegel höher als ein erster oder gleich einem ersten Arbeitswert ist, das erste verstellbare optische Dämpfungsglied dementsprechend zu steuern, um den Leistungspegel des zweiten optischen Signals auf einen vordefinierten zweiten Arbeitswert zu setzen;
- einen ersten Verstärker (OAin), um das zweite optische Signal mit dem vordefinierten zweiten Arbeitswert-Leistungspegel zu empfangen und davon ein verstärktes drittes optisches Signal gemäß einer vordefinierten ersten Leistungsverstärkung zu erzeugen,
- Mittel (DEMUX, Schaltmittel, MUX), um das dritte optische Signal zu empfangen und daraus ein viertes optisches Signal zu erzeugen; und
- einen zweiten Verstärker (OAout), um ein fünftes optisches Signal zu empfangen und daraus ein verstärktes sechstes optisches Signal zu erzeugen,
**gekennzeichnet durch**:
- ein zweites verstellbares optisches Dämpfungsglied (VOAout), um das vierte optische Signal zu empfangen und das fünfte optische Signal zu erzeugen, und
- zweite Überwachungsmittel, um den Leistungspegel des vierten oder des fünften optischen Signals zu messen und, wenn der gemessene Leistungspegel höher als ein dritter oder gleich einem dritten Arbeitswert ist, das zweite verstellbare optische Dämpfungsglied dementsprechend zu steuern, um den Leistungspegel des fünften optischen Signals auf einen vordefinierten vierten Arbeitswert zu setzen;
wobei der besagte zweite Verstärker (OAout) dazu bestimmt ist, das besagte verstärkte sechste optische Signal gemäß einer vordefinierten zweiten Leistungsverstärkung zu erzeugen.

2. Netzwerkknoten nach Anspruch 1, wobei, wenn der gemessene Leistungspegel des ersten optischen Signals kleiner als der erste Arbeitswert ist, die ersten Überwachungsmittel weiterhin angepasst sind, das erste verstellbare optische Dämpfungsglied (VOAin) dementsprechend zu steuern, um den Leistungspegel des zweiten optischen Signals auf einen ersten Nicht-Arbeitswert zu setzen, indem der Leistungspegel des Ausgangs des ersten verstellbaren optischen Dämpfungsglieds (VOAin) auf einen maximalen Dämpfungswert eingestellt wird.

3. Netzwerkknoten nach Anspruch 1, wobei, wenn der gemessene Leistungspegel des vierten optischen Signals kleiner als der dritte Arbeitswert ist, die zweiten Überwachungsmittel weiterhin angepasst sind, das zweite verstellbare optische Dämpfungsglied (VOAout) dementsprechend zu steuern, um den Leistungspegel des fünften optischen Signals auf einen zweiten Nicht-Arbeitswert zu setzen, indem der Leistungspegel des Ausgangs des zweiten verstellbaren optischen Dämpfungsglieds (VOAout) auf den maximalen Dämpfungswert eingestellt wird.

4. Netzwerkknoten nach einem der vorstehenden Ansprüche, wobei, wenn der gemessene Leistungspegel des ersten oder des zweiten optischen Signals größer als ein fünfter Arbeitswert ist, wobei der fünfte Arbeitswert größer als der erste Arbeitswert ist, die ersten Überwachungsmittel weiterhin angepasst sind, das erste verstellbare optische Dämpfungsglied (VOAin) dementsprechend zu steuern, um den Leistungspegel des zweiten optischen Signals auf einen vordefinierten sechsten Arbeitswert einzustellen, wobei der vordefinierte sechste Arbeitswert größer als der vordefinierte zweite Arbeitswert ist,
wobei der Netzwerkknoten weiterhin einen zweiten Eingangsverstärker (OA1in) umfasst, um das zweite optische Signal mit dem vordefinierten sechsten Arbeitswert-Leistungspegel zu empfangen und daraus das dritte optische Signal gemäß einer vordefinierten dritten Leistungsverstärkung zu erzeugen, wobei die dritte Leistungsverstärkung kleiner als die erste Leistungsverstärkung ist.

5. Telekommunikationsnetzwerk mit mindestens einem Netzwerkknoten nach einem der Ansprüche 1 bis 4.

## Revendications

1. Noeud de réseau comprenant :
- un premier atténuateur optique variable (VOAin) pour recevoir un premier signal optique et pour générer un deuxième signal optique ;
- des premiers moyens de surveillance pour détecter le niveau de puissance du premier ou du deuxième signal optique et, dans le cas où le niveau de puissance détecté est supérieur ou égal à une première valeur de fonctionnement, pour contrôler à partir de ceux-ci le premier atténuateur optique variable afin de régler le niveau de puissance du deuxième signal optique à une deuxième valeur de fonctionnement prédéfinie ;
- un premier amplificateur (OAin) pour recevoir le deuxième signal optique au niveau de puissance de la deuxième valeur de fonctionnement prédéfinie et pour générer à partir de celui-ci un troisième signal optique amplifié conformément à un premier gain de puissance prédéfini,
- des moyens (DEMUX, moyens de commutation, MUX) pour recevoir le troisième signal optique et pour générer à partir de celui-ci un quatrième signal optique ; et
- un deuxième amplificateur (OAout) pour recevoir un cinquième signal optique et pour générer à partir de celui-ci un sixième signal optique amplifié,
**caractérisé par** :
- un deuxième atténuateur optique variable (VOAout) pour recevoir le quatrième signal optique et pour générer le cinquième signal optique et
- des deuxièmes moyens de surveillance pour détecter le niveau de puissance du quatrième ou du cinquième signal optique et, dans le cas où le niveau de puissance détecté est supérieur ou égal à une troisième valeur de fonctionnement, pour contrôler à partir de celui-ci le deuxième atténuateur optique variable afin de régler le niveau de puissance du cinquième signal optique à une quatrième valeur de fonctionnement prédéfinie ;
ledit deuxième amplificateur (OAout) étant destiné à générer ledit sixième signal optique amplifié conformément à un deuxième gain de puissance prédéfini.

2. Noeud de réseau selon la revendication 1, dans lequel, dans le cas où le niveau de puissance détecté du premier signal optique est inférieur à la première valeur de fonctionnement, les premiers moyens de surveillance sont en outre adaptés pour contrôler à partir de celui-ci le premier atténuateur optique variable (VOAin) afin de régler le niveau de puissance du deuxième signal optique à une première valeur non opérationnelle en réglant le niveau de puissance de la sortie du premier atténuateur optique variable (VOAin) à la valeur d'atténuation maximale.

3. Noeud de réseau selon la revendication 1, dans lequel, dans le cas où le niveau de puissance détecté du quatrième signal optique est inférieur à la troisième valeur de fonctionnement, les deuxièmes moyens de surveillance sont en outre adaptés pour contrôler à partir de celui-ci le deuxième atténuateur optique variable (VOAout) afin de régler le niveau de puissance du cinquième signal optique à une deuxième valeur non opérationnelle en réglant le niveau de puissance de la sortie du deuxième atténuateur optique variable (VOAout) à la valeur d'atténuation maximale.

4. Noeud de réseau selon l'une quelconque des revendications précédentes, dans lequel, dans le cas où le niveau de puissance détecté du premier ou du deuxième signal optique est supérieur à une cinquième valeur de fonctionnement, la cinquième valeur de fonctionnement étant supérieure à la première valeur de fonctionnement, les premiers moyens de surveillance sont en outre adaptés pour contrôler à partir de celui-ci le premier atténuateur optique variable (VOAin) afin de régler le niveau de puissance du deuxième signal optique à une sixième valeur de fonctionnement prédéfinie, la sixième valeur de fonctionnement prédéfinie étant supérieure à la deuxième valeur de fonctionnement prédéfinie,
le noeud de réseau comprenant en outre un deuxième amplificateur d'entrée (OA1 in) pour recevoir le deuxième signal optique au niveau de puissance de la sixième valeur de fonctionnement prédéfinie et pour générer à partir de celui-ci le troisième signal optique conformément à un troisième gain de puissance prédéfini, le troisième gain de puissance prédéfini étant inférieur au premier gain de puissance.

5. Réseau de télécommunications comprenant au moins un noeud de réseau selon l'une quelconque des revendications 1 à 4.
